# FASCICULE DE BREVET EUROPEEN

(11) **EP 2 458 243 B1**
(45) Date de publication et mention de la délivrance du brevet: **25.02.2015**
(21) Numéro de dépôt: 11190110.4
(22) Date de dépôt: 22.11.2011
(51) Int. Cl.: F16F 1/38, F16F 7/10

(54) **Dispositif de contrôle vibratoire actif, véhicule comportant un tel dispositif et chape active pour un tel dispositif.**
Aktive Schwingungsdämpfungsvorrichtung, Fahrzeug damit und Aktive Bedeckung für diese Vorrichtung
Active vibration control device, vehicle comprising the same and active case for such a device

(30) Priorité: 26.11.2010 FR 1059814
(43) Date de publication de la demande: 30.05.2012
(73) Titulaire: Hutchinson, 75008 Paris (FR)
(72) Inventeur: Gastineau, Jean-Luc, 28220 Douy (FR); Petit, Pascal, 45190 Beaugency (FR); Seminatore, Eric, 28220 Cloyes sur Loir (FR)
(74) Mandataire: Cabinet Plasseraud

(56) Documents cités:
- DE-A1- 19 621 700
- FR-A1- 2 860 564
- JP-A- 60 172 746

## Description

La présente invention est relative aux dispositifs de contrôle vibratoire actifs pour véhicules, aux véhicules comportant de tels dispositifs et aux chapes actives pour de tels dispositifs.

Plus particulièrement, l'invention concerne un dispositif de contrôle vibratoire actif pour véhicule, comprenant :
- une bielle comportant un corps de bielle qui s'étend entre des première et deuxième articulations destinées à être reliées l'une, à un organe vibrant et l'autre, à un châssis,
- un générateur de vibrations adapté pour générer des vibrations et les transmettre au châssis.

Dans les dispositifs antivibratoires connus de ce type, le générateur de vibrations est généralement porté par le corps de la bielle, ce qui a pour inconvénient que la bielle est alourdie et favorise la transmission de vibrations, notamment verticales, de l'organe vibrant vers le châssis. En effet, l'alourdissement de la bielle a tendance à dégrader l'équilibrage dynamique de la bielle et à abaisser la fréquence des modes vibratoires verticaux de la bielle, de sorte que ces modes vibratoires verticaux coïncident avec la fréquence des excitations verticales dues à l'organe vibrant : dans ce cas, les excitations verticales dues à l'organe vibrant provoquent des phénomènes de résonance du corps de la bielle qui, à leur tour, entraînent des transmissions de vibrations importantes vers le châssis.

La présente invention a notamment pour but de pallier ces inconvénients.

A cet effet, selon l'invention, un dispositif de contrôle vibratoire du genre en question est caractérisé en ce qu'il comporte en outre une chape reliée à la deuxième articulation de la bielle de façon à permettre un pivotement de la bielle par rapport à la chape, et en ce que le générateur de vibrations est solidaire de la chape.

Grâce à ces dispositions, on évite d'alourdir la bielle, de perturber son équilibrage dynamique et d'abaisser la fréquence de ses modes propres. On évite par conséquent que l'entrée en résonance du corps de la bielle fasse de la bielle un chemin de transmission de vibrations de l'organe vibrant vers le châssis malgré la présence du générateur de vibrations.

De plus, l'invention permet de placer le générateur de vibrations directement sur le point d'ancrage de la bielle au niveau de sa deuxième articulation, de sorte que le générateur de vibrations se trouve directement au point de passage obligé des vibrations entre la bielle et l'élément auquel est fixée la deuxième articulation de la bielle (c'est-à-dire le châssis ou le cas échéant l'organe vibrant). De ce fait, les vibrations dues au générateur de vibrations peuvent être particulièrement efficaces pour neutraliser les vibrations transmises de l'organe vibrant vers le châssis par l'intermédiaire de la bielle, et l'application des vibrations dues au générateur de vibrations ne génère donc pas de moments parasites tels que ceux qui peuvent être créés lorsqu'un générateur de vibrations est fixé par exemple au châssis en un point décalé du point d'ancrage de la bielle (en effet, dans ce cas, ce moment parasite est généré par le décalage entre les points d'application sur le châssis, des vibrations venant de l'organe vibrant et des vibrations venant du générateur de vibrations).

On notera que les vibrations générées par le générateur de vibrations peuvent être déterminées :
- pour atténuer les vibrations venant de l'organe vibrant, par exemple comme enseigné par exemple dans les documents FR2860564et DE 19621700 ou, dans un autre exemple, en faisant en sorte de minimiser les vibrations dues au moteur dans l'habitacle du véhicule,
- et/ou pour créer des sons supplémentaires entendus à l'intérieur de l'habitacle et/ou à l'extérieur, par exemple pour créer artificiellement une sonorité d'un moteur autre que celui du véhicule, comme enseigné par exemple par le document EP0469023 ou le document WO2006/097188.

Dans divers modes de réalisation du dispositif de contrôle vibratoire selon l'invention, on peut éventuellement avoir recours en outre à l'une et/ou à l'autre des dispositions suivantes :
- la chape comporte un boîtier contenant le générateur de vibrations ;
- la chape comporte une platine de fixation adaptée pour se fixer sur le châssis et au moins un organe de liaison qui s'étend dans une première direction depuis la platine de fixation et qui est relié de façon pivotante à la deuxième articulation de la bielle, ledit boîtier s'étendant dans une deuxième direction opposée à la première direction à partir de la platine de fixation ;
- la chape comporte deux organes de liaison en forme de joues qui s'étendent parallèlement l'un à l'autre de part et d'autre de la deuxième articulation de la bielle ;
- chacune des première et deuxième articulations de la bielle comporte une bague en élastomère interposée entre le corps de la bielle et respectivement l'organe vibrant et le châssis ;
- le générateur de vibrations est un batteur actif à commande électrique.

Par ailleurs, l'invention a également pour objet un véhicule comportant un châssis (caisse ou berceau notamment) et un moteur reliés entre eux par un dispositif de contrôle vibratoire tel que défini ci-dessus, le moteur étant relié de façon pivotante à la première articulation de la bielle et le châssis étant solidarisé à la chape. Lorsque la chape comporte un boîtier contenant le générateur de vibrations, une platine de fixation adaptée pour se fixer sur le châssis et au moins un organe de liaison qui s'étend dans une première direction depuis la platine de fixation et qui est relié de façon pivotante à la deuxième articulation de la bielle, ledit boîtier s'étendant dans une deuxième direction opposée à la première direction à partir de la platine de fixation, le boîtier de la chape pouvant être reçu dans un logement ménagé dans le châssis, la platine de fixation étant fixée audit châssis.

Enfin, l'invention a encore pour objet une chape adaptée pour être reliée à la deuxième articulation de la bielle de façon à permettre un pivotement de la bielle par rapport à la chape ladite chape étant solidaire d'un générateur de vibrations. Eventuellement, la chape comporte un boîtier contenant le générateur de vibrations, une platine de fixation adaptée pour se fixer sur le châssis et au moins un organe de liaison qui s'étend dans une première direction depuis la platine de fixation et qui est adaptée pour être relié de façon pivotante à la deuxième articulation de la bielle, ledit boîtier s'étendant dans une deuxième direction opposée à la première direction à partir de la platine de fixation. La chape peut comporter deux organes de fixation en forme de joues qui s'étendent parallèlement l'un à l'autre de part et d'autre de la deuxième articulation de la bielle.

D'autres caractéristiques et avantages de l'invention apparaîtront au cours de la description suivante de deux de ses formes de réalisation, données à titre d'exemples non limitatifs, en regard des dessins joints.

Sur les dessins :
- la figure 1 est une vue schématique illustrant un exemple d'utilisation d'un dispositif de contrôle vibratoire selon l'invention dans un véhicule automobile,
- la figure 2 est une vue en perspective du dispositif de contrôle vibratoire avec sa chape montée sur le châssis du véhicule,
- la figure 3 est une vue éclatée du dispositif de contrôle vibratoire de la figure 2,
- la figure 4 est une vue en coupe longitudinale du dispositif de contrôle vibratoire de la figure 2, dans la première forme de réalisation de l'invention,
- et la figure 5 est une vue en coupe longitudinale du dispositif de contrôle vibratoire de la figure 2, dans la deuxième forme de réalisation de l'invention.

Sur les différentes figures, les mêmes références désignent des éléments identiques ou similaires.

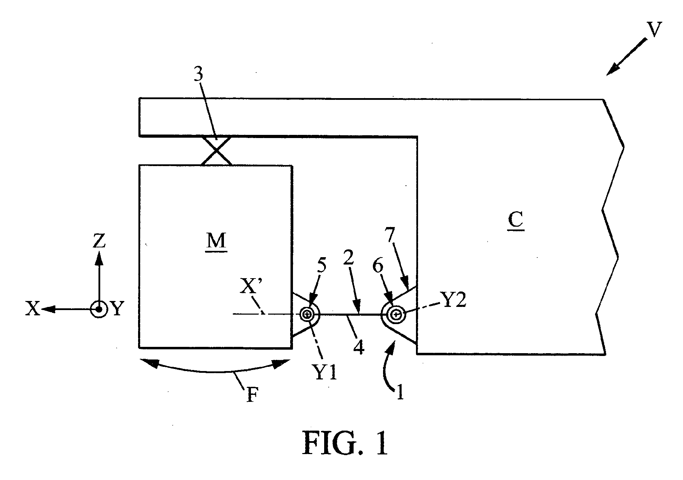

La figure 1 présente un exemple d'application d'un dispositif de contrôle vibratoire 1 pour relier un organe vibrant M à un châssis C. L'organe vibrant M peut être par exemple le moteur d'un véhicule V et le châssis C est alors la caisse ou le berceau du véhicule V.

Le dispositif de contrôle vibratoire 1 comporte une bielle 2 qui est représentée schématiquement sur la figure 1, cette bielle 2 constituant par exemple une bielle de reprise de couple qui s'étend selon une direction X' situé dans un plan X, Z où X est une direction horizontale et Z la direction verticale.

Classiquement, la bielle 2 limite les débattements relatifs entre l'organe vibrant M et le châssis C dans la direction X, par exemple lorsque l'organe vibrant M a tendance à pivoter dans la direction de la double flèche F. Dans le cas du véhicule automobile V, les pivotements en question de l'organe vibrant M peuvent être dus aux accélérations et décélérations du véhicule, l'organe vibrant M étant par exemple relié au châssis C par des supports élastiques 3 qui permettent ledit mouvement de pivotement F ainsi que des débattements verticaux de l'organe vibrant M dans la direction Z.

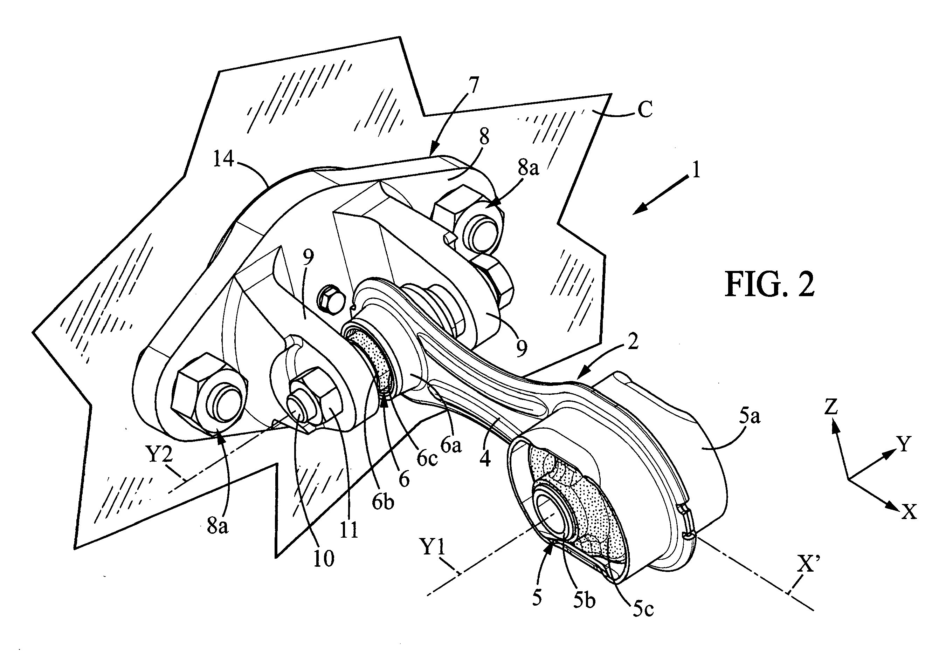

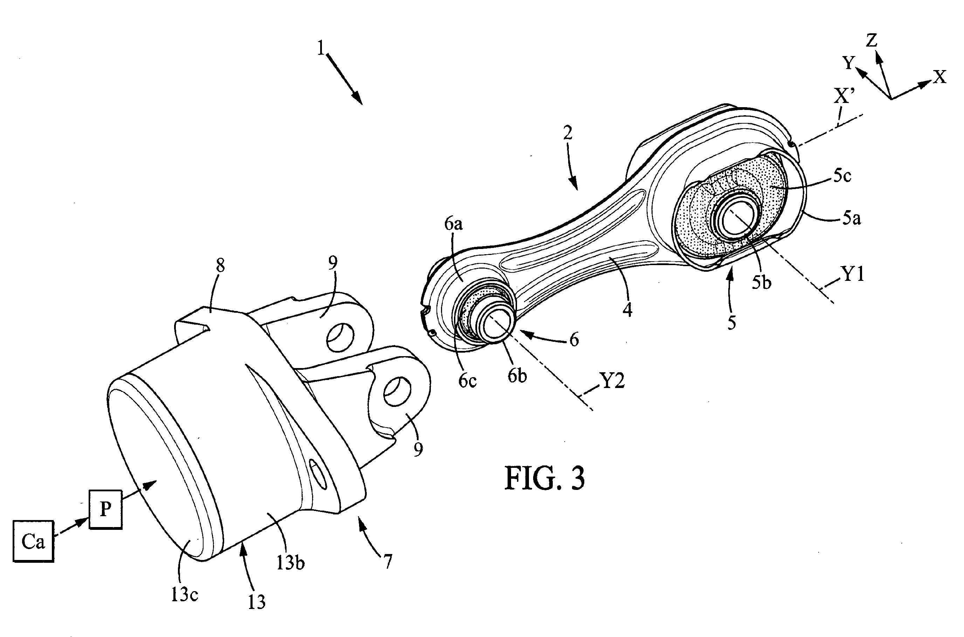

Comme représenté plus en détail sur les figures 2 à 4, la bielle 2 comporte un corps de bielle rigide 4, réalisé par exemple en tôle d'acier, en fonte, en alliage léger ou en matière plastique. Ce corps de bielle 4 s'étend longitudinalement selon la direction X' entre des première et deuxième articulations 5, 6.

Chacune des articulations 5, 6 peut par exemple comporter :
- un manchon extérieur rigide, respectivement 5a, 6a, solidaire du corps 4 de la bielle,
- un tourillon interne rigide, respectivement 5b, 6b, centrés sur des axes de pivotement Y1, Y2, parallèles à une même direction Y qui est perpendiculaire aux directions X, Z,
- et une bague souple en élastomère, respectivement 5c, 6c, disposée à l'intérieur du manchon 5a, 6a et entourant le tourillon 5b, 6b.

Le tourillon de la première articulation 5 est relié à l'organe vibrant M de façon à permettre un pivotement relatif entre le corps 4 de la bielle et l'organe vibrant M autour de l'axe de pivotement Y1, tandis que le tourillon de la deuxième articulation 6 est relié de façon pivotante à une chape 7 solidarisée au châssis C en permettant un pivotement relatif entre le corps 4 de la bielle et la chape 7 autour de l'axe de pivotement Y2 parallèle à l'axe Y.

La chape 7 peut consister en tout organe rigide permettant un montage pivotant de la bielle 2 sur le châssis C.

Dans l'exemple représenté sur les figures, cette chape 7 comporte une platine de fixation 8 s'étendant par exemple dans un plan Y,Z et adapté pour se fixer sur le châssis C, par exemple par des boulons 8a ou par tout au autre moyen.

La chape 7 comporte en outre au moins un organe de liaison 9 qui s'étend selon la direction X vers la bielle 2 et qui est relié de façon pivotante au tourillon de la deuxième articulation 6 de la bielle. Dans l'exemple considéré ici, la chape 7 comporte deux organes de liaison 9 en forme de joues qui s'étendent parallèlement l'une à l'autre, chacune dans un plan X,Z de part et d'autre de la deuxième articulation 6, ces deux joues 9 étant percées respectivement de deux trous alignés selon l'axe de pivotement Y2 et étant traversées par une pièce rigide traversant le tourillon de l'articulation 6 en permettant le pivotement de la bielle. Cette pièce rigide est constituée par exemple par une vis 10 solidarisée sur les joues 9 par un écrou 11.

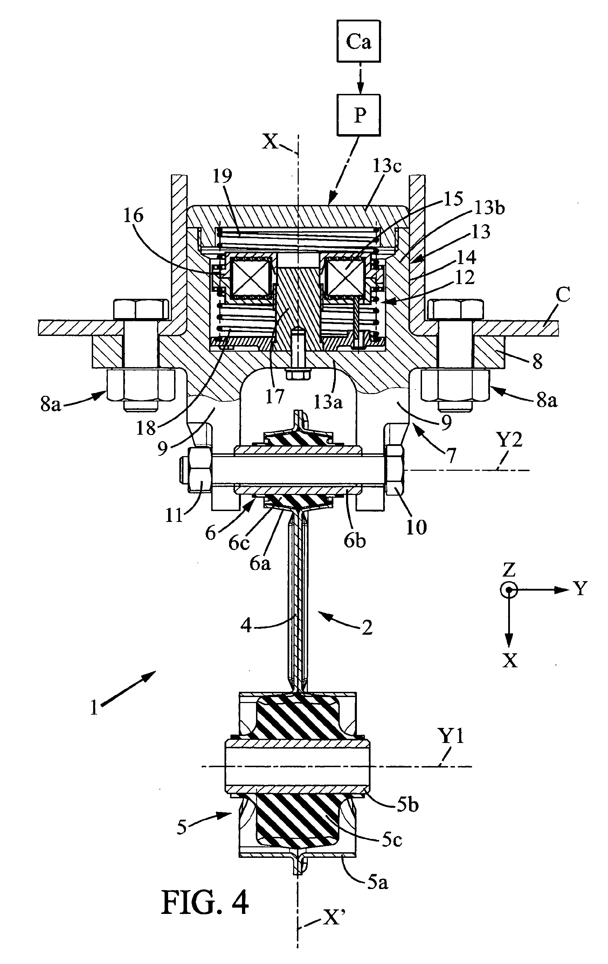

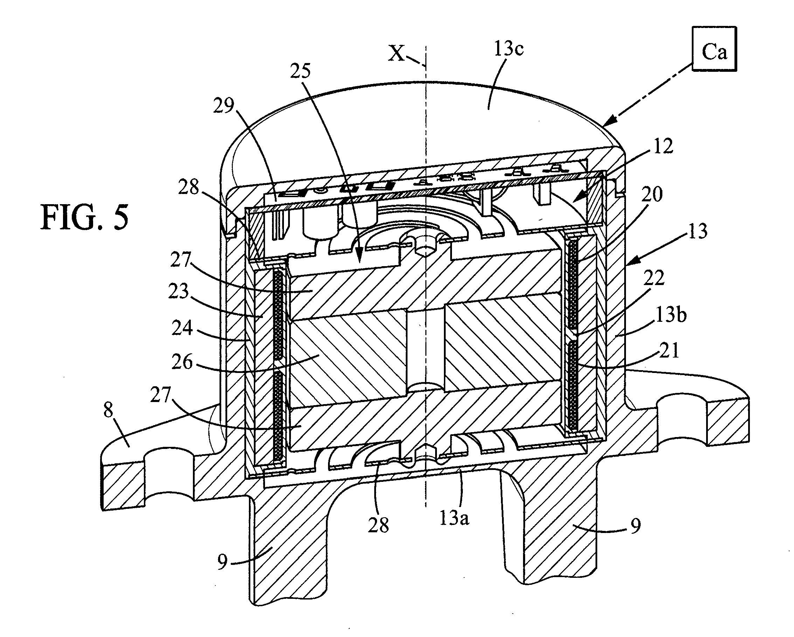

Par ailleurs, la chape 7 est solidaire d'un générateur de vibrations 12 (voir la figure 4) qui est adapté pour générer des vibrations conçues pour atténuer les vibrations venant de l'organe vibrant M et/ou générer des bruits supplémentaires imitant par exemple le bruit d'un moteur autre que le moteur M. Ce générateur de vibrations 12 peut par exemple être contenu dans un boîtier 13 appartenant à la chape 7, lequel boîtier 13 s'étend à l'opposé des joues 9 à partir de la patine de fixation 8. Ce boîtier 13 est par exemple reçu dans un logement 14 ménagé dans le châssis C du véhicule. Comme représenté sur les figures 4 et 5, le boîtier 13 peut par exemple comporter un fond 13a dans le prolongement de la platine 8, une paroi latérale cylindrique 13b qui s'étend depuis le fond 13a jusqu'à une extrémité ouverte, et un couvercle 13c vissé ou fixé autrement sur l'extrémité ouverte de la paroi latérale 13b.

Le générateur de vibrations 12 est de préférence un batteur actif à commande électrique, commandé par exemple par le calculateur Ca du véhicule, de façon connue en soi.

Ce batteur actif peut être commandé notamment pour générer des vibrations :
- adaptées pour atténuer les vibrations venant de l'organe vibrant, par exemple comme enseigné par exemple dans le document FR2860564 ou préférentiellement en faisant en sorte de minimiser les vibrations dues au moteur dans l'habitacle du véhicule : le batteur actif peut dans ce cas être contrôlé en boucle fermée, en fonction de mesures faites par exemple par un capteur de vibrations ou capteur acoustique (microphone ou similaire) placé dans l'habitacle du véhicule et relié au calculateur Ca,
- et/ou pour créer des sons supplémentaires entendus à l'intérieur de l'habitacle et/ou à l'extérieur, par exemple pour créer artificiellement une sonorité d'un moteur autre que celui du véhicule, comme enseigné par exemple par le document EP0469023 ou le document WO2006/097188.

Dans l'exemple de la figure 4, le générateur de vibrations 12 peut être du type de celui décrit dans le document EP1521352, qui comporte une bobine 15 s'étendant circulairement autour de l'axe X, cette bobine étant associée à une carcasse magnétiquement perméable 16 qui coulisse en mouvements alternatifs selon l'axe X sur une armature magnétiquement perméable 17 liée à la chape 7. Les mouvements alternatifs de la bobine 15 et de la carcasse 16, qui génèrent les vibrations, sont commandés par le calculateur Ca susmentionné qui détermine le courant électrique parcourant la bobine 15 et commande ladite bobine par exemple par l'intermédiaire d'un circuit de puissance P relié à ladite bobine par un câble (non représenté). La bobine et la carcasse 16 sont rappelées élastiquement vers une position de repos par exemple par des ressorts 18, 19 dans l'exemple considéré.

Dans l'exemple de la figure 5, le générateur de vibrations 12 peut comporter un actionneur électrodynamique qui comprend :
- deux bobines 19, 20 juxtaposées le long de l'axe X en opposition et centrées sur l'axe X du boîtier 13, montées sur une carcasse 22 réalisée par exemple en aluminium ou en matière plastique et logées par exemple dans un tube de guidage de flux magnétique 23 en acier ou similaire, ce tube 23 étant porté par une pièce de support 24 réalisée par exemple en matière plastique et surmoulée sur le tube 23,
- un équipage mobile 25 mobile en translation alternative selon l'axe X au centre de la carcasse 22, cet équipage mobile comportant par exemple un aimant permanent 26 encadré selon l'axe X par deux pièces massives 27 en acier ou similaires,
- deux ressorts 28, formés par exemple par des plaques d'acier découpées, reliant respectivement les pièces massives 27 à la pièce de support 24.

Dans ce cas, ce sont les mouvements alternatifs de l'aimant permanent 26 et des pièces massives 27 qui génèrent les vibrations recherchées.

Eventuellement, comme on peut le voir sur la figure 5 (mais cette variante peut s'appliquer également à la forme de réalisation de la figure 4), le boîtier 13 peut comporter en outre un circuit électronique 29 de commande du batteur électrique, comportant par exemple un circuit de puissance commandé directement par le calculateur Ca auquel il est relié par un câble (non représenté). Eventuellement, le circuit électronique de commande 19 peut en outre comporter un microcontrôleur qui détermine l'amplitude et la phase des mouvements du batteur électrique en fonction d'informations venant du calculateur Ca susmentionné et éventuellement d'un ou plusieurs capteurs de vibrations ou capteurs acoustiques.

## Revendications

1. Dispositif de contrôle vibratoire actif pour véhicule, comprenant :
- une bielle (2) comportant un corps de bielle (4) qui s'étend entre des première et deuxième articulations (5, 6) destinées à être reliées l'une, à un organe vibrant (M) et l'autre, à un châssis (C),
- un générateur de vibrations (12) adapté pour générer des vibrations et les transmettre au châssis (C), **caractérisé en ce qu'**il comporte en outre une chape (7) reliée à la deuxième articulation (6) de la bielle de façon à permettre un pivotement de la bielle (2) par rapport à la chape, et **en ce que** le générateur de vibrations (12) est solidaire de la chape (7).

2. Dispositif de contrôle vibratoire selon la revendication 1, dans lequel la chape (7) comporte un boîtier (13) contenant le générateur de vibrations (12).

3. Dispositif de contrôle vibratoire selon la revendication 2, dans lequel la chape comporte une platine de fixation (8) adaptée pour se fixer sur le châssis (C) et au moins un organe de liaison (9) qui s'étend dans une première direction depuis la platine de fixation (8) et qui est relié de façon pivotante à la deuxième articulation (6) de la bielle, ledit boîtier (13) s'étendant dans une deuxième direction opposée à la première direction à partir de la platine de fixation (8).

4. Dispositif de contrôle vibratoire selon la revendication 3, dans lequel la chape comporte deux organes de liaison (9) en forme de joues qui s'étendent parallèlement l'un à l'autre, de part et d'autre de la deuxième articulation (6) de la bielle.

5. Dispositif de contrôle vibratoire selon l'une quelconque des revendications précédentes, dans lequel chacune des première et deuxième articulations (5, 6) de la bielle comporte une bague en élastomère (5c, 6c) interposée entre le corps (4) de la bielle et respectivement l'organe vibrant (M) et le châssis (C).

6. Dispositif de contrôle vibratoire selon l'une quelconque des revendications précédentes, dans lequel le générateur de vibrations (12) est un batteur actif à commande électrique.

7. Véhicule comportant un châssis (C) et un moteur (M) reliés entre eux par un dispositif de contrôle vibratoire (1) selon l'une quelconque des revendications précédentes, le moteur (M) étant relié de façon pivotante à la première articulation (5) de la bielle et le châssis (C) étant solidarisé à la chape (7).

8. Véhicule selon la revendication 7, dans lequel la chape (7) comporte un boîtier (13) contenant le générateur de vibrations (12), une platine de fixation (8) adaptée pour se fixer sur le châssis (C) et au moins un organe de liaison (9) qui s'étend dans une première direction depuis la platine de fixation (8) et qui est relié de façon pivotante à la deuxième articulation (6) de la bielle, ledit boîtier (13) s'étendant dans une deuxième direction opposée à la première direction à partir de la platine de fixation (8), le boîtier (13) de la chape étant reçu dans un logement (14) ménagé dans le châssis et la platine de fixation étant fixée audit châssis.

9. Chape (7) pour un dispositif de contrôle vibratoire selon l'une quelconque des revendications 1 à 6, adaptée pour être reliée à la deuxième articulation (6) de la bielle du dispositif de contrôle vibratoire de façon à permettre un pivotement de la bielle par rapport à la chape, ladite chape (7) étant solidaire d'un générateur de vibrations (12),
et ladite chape (7) comportant :
- un boîtier (13) contenant le générateur de vibrations (12),
- une platine de fixation (8) adaptée pour se fixer sur un châssis (C) de véhicule,
- et au moins un organe de liaison (9) qui s'étend dans une première direction depuis la platine de fixation (8), cette platine de fixation étant adaptée pour être relié de façon pivotante à la deuxième articulation (6) de la bielle, ledit boîtier (13) s'étendant dans une deuxième direction opposée à la première direction à partir de la platine de fixation.

## Patentansprüche

1. Vorrichtung zur aktiven Schwingungssteuerung für ein Fahrzeug, wobei die Vorrichtung aufweist:
- eine Stange (2) mit einem Stangenkörper (4), der sich zwischen einem ersten und zweiten Gelenk (5,6) erstreckt, von denen das eine mit einem schwingenden Bauteil (M) und das andere mit einem Fahrgestell (C) verbunden werden kann,
- einen Schwingungsgenerator (12) zum Erzeugen von Schwingungen und zum Übertragen der Schwingungen auf das Fahrgestell (C),
**dadurch gekennzeichnet, dass**
die Vorrichtung außerdem eine Bedeckung (7) aufweist, die mit dem zweiten Gelenk (6) der Stange derart verbunden ist, um ein Schwenken der Stange (2) bezüglich der Bedeckung zu erlauben, und dadurch, dass der Schwingungsgenerator (12) kraftschlüssig mit der Bedeckung (7) verbunden ist.

2. Vorrichtung zur Schwingungssteuerung nach Anspruch 1, wobei die Bedeckung (7) ein Gehäuse (13) aufweist, das den Schwingungsgenerator (12) enthält.

3. Vorrichtung zur Schwingungssteuerung nach Anspruch 2, wobei die Bedeckung eine an dem Fahrgestell (C) anzubringende Befestigungsplatte (8) und mindestens ein Verbindungselement (9) aufweist, welches sich von der Befestigungsplatte (8) aus in eine erste Richtung erstreckt und mit welchem das zweite Gelenk (6) der Stange schwenkbar verbunden ist, wobei sich das Gehäuse (13) von der Befestigungsplatte (8) aus in eine zweite Richtung erstreckt, die entgegengesetzt zur ersten Richtung ist.

4. Vorrichtung zur Schwingungssteuerung nach Anspruch 3, wobei die Bedeckung zwei backenförmige Verbindungselemente (9) aufweist, die sich parallel zueinander beiderseits des zweiten Gelenks (6) der Stange erstrecken.

5. Vorrichtung zur Schwingungssteuerung nach einem der vorstehenden Ansprüche, wobei sowohl das erste wie auch das zweite Gelenk (5,6) der Stange einen Ring (5c,6c) aus einem Elastomermaterial aufweist, der zwischen dem Körper (4) der Stange und dem schwingenden Bauteil (M) bzw. dem Fahrgestell (C) angeordnet ist.

6. Vorrichtung zur Schwingungssteuerung nach einem der vorstehenden Ansprüche, wobei der Schwingungsgenerator (12) eine elektrisch gesteuerte aktive Schlageinrichtung ist.

7. Fahrzeug mit einem Fahrgestell (C) und einem Motor (M), die miteinander verbunden sind über eine Schwingungssteuerungsvorrichtung (1) nach einem der vorstehenden Ansprüche, wobei das erste Gelenk (5) der Stange schwenkbar an dem Motor (M) angebracht ist und die Bedeckung (7) kraftschlüssig an dem Fahrgestell (C) angebracht ist.

8. Fahrzeug nach Anspruch 7, wobei die Bedeckung (7) aufweist: ein Gehäuse (13), das den Schwingungsgenerator (12) enthält, eine an dem Fahrgestell (C) anzubringende Befestigungsplatte (8) und mindestens ein Verbindungselement (9), welches sich von der Befestigungsplatte (8) aus in eine erste Richtung erstreckt und mit welchem das zweite Gelenk (6) der Stange schwenkbar verbunden ist, wobei sich das Gehäuse (13) von der Befestigungsplatte (8) aus in eine zweite Richtung erstreckt, die entgegengesetzt zur ersten Richtung ist, wobei das Gehäuse (13) der Bedeckung in einer in dem Fahrgestell ausgesparten Aufnahme (14) aufgenommen ist und die Befestigungsplatte an dem Fahrgestell befestigt ist.

9. Bedeckung (7) für eine Schwingungssteuerungsvorrichtung nach einem der Ansprüche 1 bis 6, wobei die Bedeckung (7) mit dem zweiten Gelenk (6) der Stange der Schwingungssteuerungsvorrichtung derart verbunden ist, um ein Schwenken der Stange bezüglich der Bedeckung zu erlauben, wobei die Bedeckung kraftschlüssig mit einem Schwingungsgenerator (12) verbunden ist und die Bedeckung (7) aufweist:
- ein Gehäuse (13), das den Schwingungsgenerator (12) enthält,
- eine an einem Fahrgestell (C) eines Fahrzeugs anbringbare Befestigungsplatte (8) und
- mindestens ein Verbindungselement (9), das sich von der Befestigungsplatte (8) aus in eine erste Richtung erstreckt,
wobei an dieser Befestigungsplatte (8) das zweite Gelenk (6) der Stange schwenkbar anbringbar ist und das Gehäuse (13) sich von der Befestigungsplatte (8) aus in eine zweite Richtung erstreckt, die entgegengesetzt zur ersten Richtung ist.

## Claims

1. Active vibratory control device for a vehicle, comprising:
- a link (2) comprising a link body (14) that extends between first and second articulations (5,6) intended to be connected one to the vibrating member (M) and the other to a chassis (C),
- a vibration generator (12) adapted for generating vibrations and transmitting them to the chassis (C),
**characterized in that** said vibratory control device also comprises a mounting base (7) connected to the second articulation (6) of the link so as to enable the link (2) to pivot with respect to the mounting base, and **in that** the vibration generator (12) is secured to the mounting base (7).

2. Vibratory control device according to claim 1, in which the mounting base (7) comprises a casing (13) comprising the vibration generator (12).

3. Vibratory control device according to claim 2, in which the mounting base comprises a fixing plate (8) adapted to be fixed to the chassis (C) and at least one connecting member (9) that extends in a first direction from the fixing plate (8) and is pivotally connected to the second articulation (6) of the link, said casing (13) extending in a second direction opposite to the first direction from the fixing plate (8).

4. Vibratory control device according to claim 3, in which the mounting base comprises two connecting members (9) in the form of cheeks that extend parallel to each other, on either side of the second articulation (6) of the link.

5. Vibratory control device according to any one of the preceding claims, in which each of the first and second articulations (5,6) of the link comprises an elastomer ring (5c,6c) interposed between the body (4) of the link and respectively the vibrating member (M) and the chassis (C).

6. Vibratory control device according to any one of the preceding claims, in which the vibration generator (12) is an electrically controlled active beater.

7. Vehicle comprising a chassis (C) and an engine (M) connected together by a vibratory control device (1) according to any one of the preceding claims, the engine (M) being pivotally connected to the first articulation (5) of the link and the chassis (C) being secured to the mounting base (7).

8. Vehicle according to claim 7, in which the mounting base (7) comprises a casing (13) containing the vibration generator (12), a fixing plate (8) adapted to be fixed to the chassis (C) and at least one connecting member (9) that extends in a first direction from the fixing plate (8) and is pivotally connected to the second articulation (6) of the link, said casing (13) extending in a second direction opposite to the first direction from the fixing plate (8), the casing (13) of the mounting base being received in a housing (14) formed in the chassis and the fixing plate being fixed to said chassis.

9. Mounting base (7) for a vibratory control device according to any one of the claims 1 to 6, adapted to be connected to the second articulation (6) of the link of the vibratory control device so as to enable the link to pivot with respect to the mounting base, said mounting base (7) being secured to a vibration generator (12)
and said mounting base (7) comprising:
- a casing (13) containing the vibration generator (12),
- a fixing plate (8) adapted to be fixed to a vehicle chassis (C),
- and at least one connecting member (9) that extends in a first direction from the fixing plate (8), this fixing plate being adapted to be pivotally connected to the second articulation (6) of the link, said casing (13) extending in a second direction opposite to the first direction from the fixing plate.
